Europäisches Patentamt

European Patent Office

Office européen des brevets

(11) Numéro de publication: **0 037 338**
**B1**

(12) **FASCICULE DE BREVET EUROPEEN**

(45) Date de publication du fascicule du brevet: **27.12.84**

(21) Numéro de dépôt: **81400499.0**

(22) Date de dépôt: **27.03.81**

(51) Int. Cl.³: **A 01 C 7/04, A 01 C 7/08**

(54) **Dispositif de transport pneumatique pour semoir monograine.**

(30) Priorité: **31.03.80 FR 8007190**

(43) Date de publication de la demande:
**07.10.81 Bulletin 81/40**

(45) Mention de la délivrance du brevet:
**27.12.84 Bulletin 84/52**

(84) Etats contractants désignés:
**AT BE CH DE FR GB IT LI LU NL SE**

(56) Documents cités:
**FR-A-1 378 012**

(73) Titulaire: **Société SOGEFINA Société de Gestion
Financière Armoricaine (Société Anonyme)
49-51, rue de Ponthieu
F-75008 Paris (FR)**

(72) Inventeur: **Herriau, Paul
Rue Lucien Sampaix
Proville F-59400 Cambrai (FR)**

(74) Mandataire: **Lemonnier, André
Cabinet LEMONNIER 4, Boulevard Saint-Denis
F-75010 Paris (FR)**

Courier Press, Leamington Spa, England.

EP 0 037 338 B1

**Description**

La présente invention concerne, dans les semoirs, le transport pneumatique des graines distribuées une à une par un distributeur, de ce distributeur au point de dépôt sur le sol ou dans le sillon.

Un tel dispositif qui illustre l'art antérieur est décrit par exemple dans le brevet français N° 1.284.678 et il comporte un tube d'amenée dans lequel les graines sont introduites une à une, un dispositif dit répartiteur constitué par un cône à travers la base duquel pénêtre le tube d'amenée et un tube de sortie partant du sommet du cône pour aboutir dans le sillon. De l'air sous pression est introduit dans le cône et passe entre la paroi de celui-ci et l'extrémité du tube d'amenée pour créer une aspiration dans le tube d'amenée et une pression de refoulement dans le tube de sortie. L'extrémité du tube de sortie voisine du sol comporte des perforations pour permettre à l'air de s'échapper pour ne pas venir souffler la graine déposée dans le sillon. Dans un perfectionnement (FR—A—1378012), une chambre d'aspiration entoure ces perforations situées également près de l'orifice d'expulsion de la graine du conduit, cette chambre étant reliée à l'aspiration du générateur qui fournit l'air sous pression du dispositif de transport pneumatique. Dans le dispositif décrit dans les brevets ci-dessus dans lequel un distributeur alimente un seul rang et est placé très près du soc, le tube de sortie est très court et présente une section constante, mais on a constaté que, dans les semoirs comportant un distributeur central à partir duquel partent des tubes de sortie dont la longueur peut être de plusieurs mètres pour alimenter les socs extrêmes d'un semoir douze rangs, il se produisait un phénomène pneumatique qui aboutissait à un mauvais fonctionnement et à des perturbations, le courant d'air pouvant s'inverser dans le tube d'aspiration qui est très court par rapport au tube de sortie.

La nature de ce phénomène n'a pas été clairement déterminée par l'inventeur mais on suppose que le dispositif dit répartiteur, qui est en fait un injecteur fonctionnant en Venturi, crée dans la partie initiale du tube de sortie qui forme un col, une zone de dépression où l'air a une très grande vitesse laquelle est suivie d'un tube de grande longueur avec des variations de section dans lequel cette vitesse se transforme en pression. Or dans ce transport pneumatique, dans des tuyaux de section relativement réduite, de graines individualisées, il est nécessaire non de disposer d'une pression pour vaincre la résistance d'une colonne dense comme dans les transports pneumatiques usuels mais d'engendrer une vitesse élevée et constante.

Ceci est obtenu conformément à l'invention par la réalisation, en aval et à une faible distance du col du passage annulaire formant convergent pour l'air comprimé assurant la propulsion, d'au moins un orifice d'évacuation d'air.

Il a été constaté de manière totalement inattendue que ces orifices qui évacuent une partie du volume d'air sous pression injecté et du volume de l'air aspiré par le tube d'amenée évitent le phénomène ci-dessus.

Selon un mode de réalisation préférentiel le dispositif de transport comporte au droit de chaque poste de distribution du distributeur, une chambre cylindrique étanche en communication avec une canalisation d'alimentation en air sous pression, un tube d'amenée qui est count et débouche axialement à la partie supérieure de cette chambre, un raccord de tube de transport débouchant axialement à la partie inférieure de cette chambre, ce tube se terminant par un évasement sensiblement tronconique entourant l'extrémité du tube d'amenée et au moins un trou traversant ce raccord de tube de transport pour déboucher, d'une part, dans le passage tubulaire central de celui-ci et, d'autre part, à l'extérieur de ladite chambre étanche.

De préférence, les forages constituant les trous sont divergents vers l'aval et leur section totale correspond environ à 1/2 à 1/3 de la section du passage tubulaire du raccord.

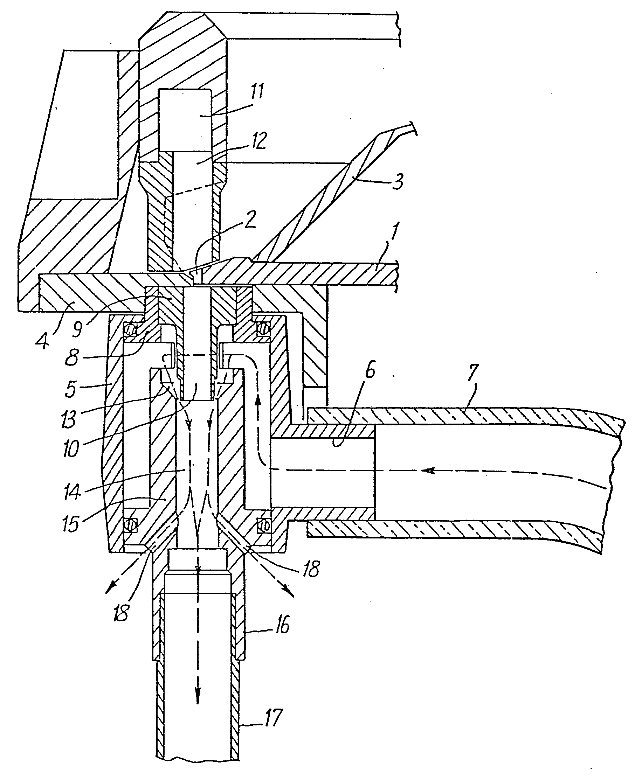

L'invention sera décrite plus en détail ci-après avec référence à la figure unique du dessin ci-annexé qui représente en coupe radiale axiale un poste de distribution d'un distributeur de semoir "monograine".

Le distributeur illustré à titre d'exemple est du type comprenant un plateau rotatif 1 avec dans sa périphérie des logements 2 dans chacun desquels vient se loger une graine, les graines étant déversées sur la partie centrale conique 3 du plateau rotatif. Cette partie périphérique du plateau rotatif 1 se déplace au-dessus d'un plateau fixe 4 à la périphérie duquel sont répartis des postes de distribution dont un est illustré en détail au dessin. Ces postes de distribution sont en un nombre égal à celui des rayons à semer.

Chaque poste de distribution comporte un corps 5 dans lequel est réalisé un alésage ou chambre cylindrique et un raccord 6 pour un tube souple 7 d'alimentation en air sous pression. L'alésage cylindrique du corps est fermé de façon étanche à sa partie supérieure par un embout 8 solidarisé avec le plateau fixe 4 par exemple par vissage. Dans cet embout est logé l'élément 9 formant le tube d'amenée 10 dans lequel tombe la graine garnissant un logement 2 lorsque ce logement arrive au droit du tube 10, cet entraînement étant facilité par l'effet d'aspiration créé dans le tube 10 par l'effet Venturi dont il sera parlé ci-après et par le courant d'air aspiré dans la chambre 11 par le passage coaxial 12 ou depuis l'extérieur par les jeux existants entre le plateau rotatif 1 et les parties fixes notamment le plateau fixe 4, ce qui aspire les graines dans les logements 2.

L'extrémité inférieure de l'élément tubulaire 9 dont la section externe va en se rétrécissant est engagée dans l'évasement terminal tronconique 13 du passage axial tubulaire 14 de la pièce 15 formant raccord du tube de transport. Cette pièce 15 est engagée de façon étanche dans la chambre cylindrique du corps 1 et elle se termine à l'extérieur de cette chambre par des éléments de raccord 16 pour le tube souple de transport 17 qui conduit á l'organe de mise en terre de la graine dans chaque sillon.

Conformément à l'invention six perçages obliques 18 régulièrement répartis à la périphérie mettent en communication l'extrémité aval du passage tubulaire 14 de la pièce 15 avec l'atmosphère. Dans le mode de réalisation représenté l'alimentation est effectuée sous une pression de 0,15 à 0,20 kg/mm², le passage tubulaire 14 a une section de 104 mm² et une longueur d'environ 40 mm, le passage tubulaire 10 une section de 50 mm², le passage annulaire à la périphérie de l'extrémité de la pièce 9 a une section de 24 mm² et le tube 17 a une section intérieure de 133 mm² et une longueur variant de 1,40 à 3 mètres. Conformément à l'invention, on prévoit six perçages obliques 18 de 3 mm de diamètre ayant une section totale de 42,5 mm². Avec cette réalisation, le transport pneumatique des graines s'est effectué régulièrement, sans à coup et avec une très grande régularité d'espacement entre les graines. Lorsque les orifices 18 ont été bouchés, on a constaté des perturbations dans le transport et dans la répartition des graines.

**Revendications**

1. Un dispositif de transport pneumatique pour chaque poste de distribution d'un semoir monograine sur le trajet allant du distributeur au sillon, comportant successivement un tube d'amenée (10) dans lequel les graines sont introduites une à une, un passage annulaire formant convergent (13) pour de l'air sous pression situé à la périphérie de l'extrémité du tube d'amenée (10) et un passage cylindrique (14) prolongeant ce passage annulaire et dont l'extrémité est raccordée au tube (17) de transport pneumatique, caractérisé en ce qu'il comporte en aval et à une faible distance du col du passage annulaire formant convergent 13 au moins un orifice ou trou (18) mettant en communication le passage cylindrique (14) avec l'atmosphère.

2. Un dispositif de transport pneumatique selon la revendication 1, caractérisé en ce qu'il comporte une chambre cylindrique étanche (5) en communication avec une canalisation (7) d'alimentation en air sous pression, le tube d'amenée (10), qui est court et débouche axialement à la partie supérieure de cette chambre, un raccord (15) pour le tube de transport situé à la base de la chambre (5) et tenant lieu à la fois de passage annulaire et de passage cylindrique, le passage tubulaire (14) de ce raccord (15) s'évasant à sa partie amont ou supérieure (13) pour entourer l'extrémité inférieure du tube d'amenée (10), et au moins un trou (18) traversant le raccord (15) pour déboucher, d'une part dans le passage tubulaire (14) et, d'autre part, à l'extérieur de la chambre étanche (5).

3. Un dispositif de transport pneumatique selon l'une quelconque des revendications 1 et 2, caractérisé en ce que plusieurs forages (18) constituant les trous divergent vers l'aval et leur section totale correspond environ à 1/2 à 1/3 de la section du passage cylindrique ou tubulaire (14).

**Patentansprüche**

1. Pneumatische Transportvorrichtung für eine jede Verteilerstation einer Sämaschine, wobei die Transportvorrichtung zwischen einer jeden Verteilerstation und der Ackerfurche angeordnet ist, bestehend aus einem Zuführrohr (10), in welches ein Saatkorn nach dem anderen eingeführt wird, einem für die Druckluft bestimmten konvergierenden Ringraum (13), welcher am Umfang des äußeren Endes des Zuführrohres (10) liegt und einem zylinderförmigen Kanal (14), welcher den Ringraum (13) verlängert und dessen äußeres Ende an ein Rohr (17) für den Transport der Druckluft angeschlossen ist, dadurch gekennzeichnet, daß die Transportvorrichtung stromab und in einem geringen Abstand zu dem höchsten Punkt des konvergierenden Ringraumes (13) eine Öffnung (18) aufweist, welche den zylinderförmigen Kanal (14) mit der Atmosphäre verbindet.

2. Vorrichtung nach Anspruch 1, dadurch gekennzeichnet, daß die Vorrichtung eine zylinderförmige, dichte Kammer (5) aufweist, welche mit einer Druckluft-Zuführleitung (7) in Verbindung steht, daß das kurze Zuführrohr (10) in axialer Richtung in den oberen Teil dieser Kammer (5) einmündet, daß ein Anschluß (15) für das Rohr (17) für den Transport der Druckluft vorgesehen ist, welcher im unteren Teil der Kammer (5) liegt und gleichzeitig als Ringkanal und als zylinderförmiger Kanal dient und daß der zylinderförmige Kanal (14) dieses Anschlusses (15) in seinem stromauf oder oben liegenden Teil eine das untere äussere Ende des Zuführrohres (10) umgebende Erweiterung (13) und zumindest eine den Anschluß (15) durchsetzende Bohrung (18) aufweist, welche einerseits in den zylinderförmigen Kanal (14) einmündet und andererseits von der dichten Kammer (5) nach außen führt.

3. Vorrichtung nach einem der Ansprüche 1 und 2, dadurch gekennzeichnet, daß mehrere, die stromab sich erweiternden Öffnungen bildende Bohrungen (18) vorgesehen sind und daß deren Gesamtquerschnitt etwa 1/2 bis 1/3 des Querschnittes des zylinderförmigen Kanales (14) ist.

## Claims

1. A pneumatic transport apparatus for each distribution point of a single-seed seed drill, on the path from the distributor to the furrow, comprising one after another an inlet tube (10) into which the seeds are introduced one by one, an annular passage (13) of convergent from for air under pressure situated at the periphery of the end of the inlet tube (10) and a cylindrical passage (14) extending the annular passage and whose end is connected to the pneumatic transport tube (17), characterized in that it comprises downstream and at a small distance from the neck of the annular passage (13) of convergent form, at least one opening or hole (18) communicating between the cylindrical passage (14) and the atmosphere.

2. A pneumatic transport device according to claim 1, characterized in that it comprises a sealed cylindrical chamber (5) in communication with a passageway (7) for feeding air under pressure, the intake tube (10) which is short and opens axially into the upper portion of this chamber, a connection (15) for the transport tube, situated at the bottom of the chamber (5) and acting at once as annular passage and cylindrical passage, the tubular passage (14) of this connection (15) enlarging at its upstream or upper part (13) to surround the lower end of the inlet tube (10) and at least one hole (18) passing through the connection (15) to open, on the one hand, into the tubular passageway (14) and, on the other hand, outside the sealed chamber (5).

3. A pneumatic transport device according to either one of claims 1 and 2, characterized in that several borings (18) constituting the holes diverge downstream and their total cross section corresponds to about 1/2 to 1/3 of the section of the cylindrical or tubular passage (14).